# EUROPÄISCHE PATENTSCHRIFT

(11) **EP 0 798 183 B1**
(45) Veröffentlichungstag und Bekanntmachung des Hinweises auf die Patenterteilung: **10.04.2002**
(21) Anmeldenummer: 96120309.8
(22) Anmeldetag: 18.12.1996
(51) Int. Cl.: B60S 1/04

(54) **Rohrplatine**
Mounting plate made of tubes
Platine de support tubulaire

(30) Priorität: 26.03.1996 DE 19611921; 16.10.1996 DE 19642672
(43) Veröffentlichungstag der Anmeldung: 01.10.1997
(73) Patentinhaber: ROBERT BOSCH GMBH, 70442 Stuttgart (DE)
(72) Erfinder: Muehlpforte, Kurt, 77815 Buehl (DE); Becker, Henk, 77815 Buehl (DE); Fleischer, Claus, 77815 Buehl (DE); Boos, Tino, Dipl.-Ing. (FH), 76532 Baden-Baden (DE)

(56) Entgegenhaltungen:
- EP-A- 0 739 793
- EP-A- 0 897 357
- DE-A- 2 920 899
- DE-A- 4 333 484
- FR-A- 2 667 833
- WERKSTATT UND BETRIEB, Bd. 128, Nr. 9, 1.September 1995, Seiten 812-816, XP002033349 PISCHEL H: "Bewährtes Innenhochdruck-Umformen"

## Beschreibung

### Stand der Technik

Die Erfindung betrifft eine Rohrplatine für eine Wischeranlage als Träger für mindestens ein Wischerlager und einen Wischerantrieb, die Rohrstutzen zur Aufnahme des Wischerlagers aufweist, wobei die Rohrplatine spanlos umgeformt ist und die Rohrstutzen zur Aufnahme eines Wischerlagers an der Rohrplatine einstückig angeformt sind, wobei an den Enden der Rohrplatine Befestigungselemente angeformt sind. Eine derartige Rohrplatine ist in der nicht vorveröffentlichten EP-A-0 857 357 (WO-A-97/34789) dargestellt, die unter Art. 54(3) und (4) EPÜ fällt und daher für die Frage der Erfinderischen Tätigleeit nicht von Bedeutung ist.

Bekannte Wischeranlagen besitzen einen Scheibenwischerrahmen, an dem ein Wischerantrieb, bestehend aus einem Elektromotor und einem Getriebe, eine Antriebswelle mit einer Antriebskurbel und Antriebsstangen, Wischerlager sowie Abtriebswellen mit Abtriebskurbeln montiert sind. Der Scheibenwischerrahmen dient als Träger und zur Befestigung der Wischeranlage an einer Karosserie eines Fahrzeugs. Er setzt sich aus zahlreichen Einzelteilen zusammen, so daß sich viele Fertigungsund Montageschritte ergeben. Um das Gewicht der Wischeranlage zu reduzieren, werden als Träger Hohlprofile, sogenannte Rohrplatinen, verwendet.

Eine derartige Rohrplatine ist aus der DE-C-29 20 899 bekannt, wobei in das Hohlprofil des Trägers Rohrstutzen mit entsprechenden Ansätzen eingeschoben werden. Die Ansätze liegen wenigstens teilweise an den Wandungen des Trägers an und weisen wenigstens eine Aussparung auf, in die Abschnitte des Trägers eingedrückt sind, um eine formschlüssige Verbindung zwischen dem Träger und dem Rohrstutzen zu bilden. In den Rohrstutzen sind Wischerlager angeordnet.

Gegenüber Schraubverbindungen ist die Anzahl der Teile reduziert, dennoch erfordert der Fügeprozeß noch zahlreiche vorgefertigte Einzelteile mit vielen Fertigungsschritten. Dies verteuert die Lagerhaltung und Logistik. Ferner haben die massiven Ansätze trotz der Aussparungen ein erhebliches Gewicht.

Es ist ferner aus der Zeitschrift "Werkstatt und Betrieb", Carl Hanser Verlag München, 1995, Seiten 812 bis 815, und dem Sonderdruck aus der Zeitschrift "Metallumformtechnik", Claus Dannert Verlag, 1994, unter dem Titel "Präzisions-Werkstücke in Leichtbauweise, hergestellt durch Innenhochdruck-Umformen", ein Verfahren zum Umformen von Rohren zu Werkstücken bekannt. Dieses Verfahren, das vor allem für die Kraftfahrzeugindustrie verwendet wird, arbeitet mit hohen Drücken.

Das umzuformende Rohrstück wird in ein geteiltes Werkzeug gelegt, in das die gewünschte Werkstückform eingearbeitet ist. Das Werkzeug, das in einer Presse montiert -ist, wird durch einen vertikal arbeitenden Pressenstößel geschlossen. Die Rohrstückenden werden durch Schließwerkzeuge geschlossen, durch die ein Druckmedium zugeführt wird, das die Rohrwandungen gegen die innere Werkzeugform preßt. Dabei wird von horizontal wirkenden Stößeln ein axialer Druck auf das Rohr aufgebracht, der sich dem Innendruck überlagert. Somit wird der Werkstoff, der für die Umformung erforderlich ist, nicht nur aus der Wanddicke des Rohrstücks entnommen, sondern auch durch die Verkürzung des Rohrs zur Verfügung gestellt. Die Schließwerkzeuge werden während des Umformens axial nachgeführt.

Aus der nicht vorveröffentlichten EP-A-0 857 357 ist bereits eine Wischeranlage bekannt, die eine Rohrplatine aufweist, die in einem Innenhochdruck-Umformverfahren hergestellt ist.

Weiterhin ist aus der EP-A-0 739 793 eine Wischanlage bekannt, in der eine Rohrplatine an ihren freien Enden jeweils ein Wischerlager trägt, welches mittels U-förmiger Profile an der Karosserie eines Kraftfahrzeugs befestigt werden kann.

### Vorteile der Erfindung

Erfindungsgemäß weist die Rohrplatine angeformte Rohrstutzen zur Lagerung von Wischern und insbesondere zum Befestigen eines Wischerantriebs auf. Dadurch werden in einem Arbeitsgang die wesentlichen Bestandteile der Rohrplatine in einem einstückigen Werkstück hergestellt. Für die Wischeranlage verringert sich das Gewicht, die Anzahl der Bauteile, die Gesamtzahl der Schnitt- und Fügestellen, sowie die Werkstoffvielfalt, die einen späteren Recycle-Prozeß erschwert.

Für weitere Funktionen können zusätzliche Form- oder Rohrstutzen vorgesehen werden. Sie werden zweckmäßigerweise erst geöffnet, wenn sie benötigt werden. Somit kann die Rohrplatine für eine Anzahl von Einsatzfällen vorbereitet werden. Da die nicht benötigten Rohrstutzen geschlossen bleiben, ist das Innere der Rohrplatine gegen Feuchtigkeit und Korrosion geschützt. Es ist auch möglich die zusätzlichen Rohrstutzen einzeln herzustellen und bei Bedarf mit der Rohrplatine durch Stecken, Klemmen, Schrauben, Schweißen usw. zu verbinden.

Das Gewicht der Rohrplatine ist sehr gering, da die Rohrstutzen im wesentlichen die gleiche geringe Wandstärke haben wie das übrige Profil. Ferner können durch geeignete Profile, z. B. unrunde Querschnitte, Polygonprofile usw., der Leichtbau, die Steifigkeit und das Schwingungsverhalten verbessert werden, wobei örtlich je nach Beanspruchung unterschiedliche Querschnitte vorteilhaft verwendet werden können. Mit Profilen, deren Querschnitt von einer Kreisform abweicht, können in einfacher Weise Formschlußverbindungen in Umfangsrichtung hergestellt werden.

Nach der Erfindung werden an den Enden der Rohrplatine Befestigungselemente angeformt. Sie sind U-förmig profiliert und weisen eine Öffnung in Form eines Lochs oder Schlitzes auf. Die Befestigungselemente werden zweckmäßigerweise durch Pressen aus einem Endabschnitt des Rohrs umgeformt und die Öffnungen danach ausgestanzt. Die vorhergehenden Vorteile werden dadurch in einem größeren Ausmaß erreicht.

Bei langen Rohrplatinen und schweren Anbauelementen kann es zweckmäßig sein, ein zusätzliches Stütz- und Befestigungselement zwischen den Enden der Rohrplatine vorzusehen. Dieses kann unmittelbar an der Rohrplatine angreifen, indem es mit ihr verschraubt oder verschweißt oder auf bzw. in einen entsprechenden Aufnahmesitz gesteckt oder geklemmt ist. Der Aufnahmesitz kann an einem Rohrstutzen angeordnet sein. Ferner kann das zusätzliches Stütz- und Befestigungselement mittelbar die Rohrplatine stützen, indem es in ähnlicher Weise mit einem vorstehenden Gehäuseteil des Wischerantriebs verbunden ist.

Die erfindungsgemäße Rohrplatine kann selbst bei schwierigen Einbauverhältnissen verwendet werden. Entsprechend den räumlichen Gegebenheiten kann sie in einer oder in mehreren Ebenen einfach oder mehrfach gekrümmt sein.

Zur Herstellung der Rohrplatine eignet sich in vorteilhafter Weise das Innenhochdruckverfahren, bei dem eine geteilte Werkzeugform ein Rohrstück aufnimmt und geschlossen wird. Dichtwerkzeuge verschließen die Rohrenden und werden zweckmäßigerweise axial nachgeschoben, während auf das Rohrende gleichzeitig ein axialer Druck ausgeübt wird. So erreicht man gleichmäßige Wandstärken und präzise Konturen, die keine oder nur geringe mechanische Nacharbeiten erfordern. Das Verfahren läßt eine flexible Formgestaltung zu, so daß die erfindungsgemäße Rohrplatine selbst in einer komplexen Version mit mehrfachen Krümmungen in mehreren Ebenen leicht herzustellen ist.

Für das Verfahren verwendet man vorteilhaft verzinktes Stahlrohr mit einer geringen Festigkeit oder ein Rohr aus einer Aluminiumlegierung. Sie sind ausreichend fließfähig und korrosionsbeständig, und brauchen nicht nachbehandelt zu werden. Daneben haben Aluminiumlegierungen noch weitere Gewichtsvorteile. Es werden sowohl nahtlose als auch längsgeschweißte Rohre verwendet.

Weitere Vorteile ergeben sich aus der folgenden Zeichnungsbeschreibung.

### Zeichnung

In der Zeichnung sind Ausführungsbeispiele der Erfindung dargestellt. In der Beschreibung und in den Ansprüchen sind zahlreiche Merkmale im Zusammenhang dargestellt und beschrieben. Der Fachmann wird die Merkmale zweckmäßigerweise auch einzeln betrachten und zu weiteren sinnvollen Kombinationen zusammenfassen.

Es zeigen:
- Fig. 1: eine Wischeranlage mit einer erfindungsgemäßen Rohrplatine ohne Antriebsstangen,
- Fig. 2 - 4: Varianten eines angeformten Befestigungselements in Teilansichten gemäß Pfeil II in Fig. 1,
- Fig. 5: eine Teilansicht der Variante nach Fig. 4 in Pfeilrichtung V in Fig. 4,
- Fig. 6 - 9: Teilansichten in Pfeilrichtung VI in Fig. 1 von Rohrstutzen mit unterschiedlichen Querschnittprofilen,
- Fig. 10: eine Teilansicht eines Wischerantriebs mit einer Stütze an einem Getriebe,
- Fig. 11: eine Teilansicht auf einen Wischerantrieb nach Fig. 10 von oben mit einem Schnitt durch die Stütze entsprechend der Linie XI - XI in Fig. 10,
- Fig. 12: eine Teilansicht eines Wischerantriebs mit einer Stütze zwischen dem Getriebe und der Rohrplatine,
- Fig. 13: eine Teilansicht eines Wischerantriebs nach Fig. 12 von oben mit einem Querschnitt durch die Stütze entsprechend der Linie XIII - XIII in Fig. 12,
- Fig. 14: eine schematische Ansicht einer mehrfach gekrümmten Rohrplatine,
- Fig. 15 - 17: schematische Ansichten entsprechend der Pfeilrichtung XV in Fig. 14 unterschiedlicher Varianten von Rohrplatinen,
- Fig. 18: einen schematischen Querschnitt durch ein Werkzeug zum Herstellen einer Rohrplatine mit einem erfindungsgemäßen Verfahren.

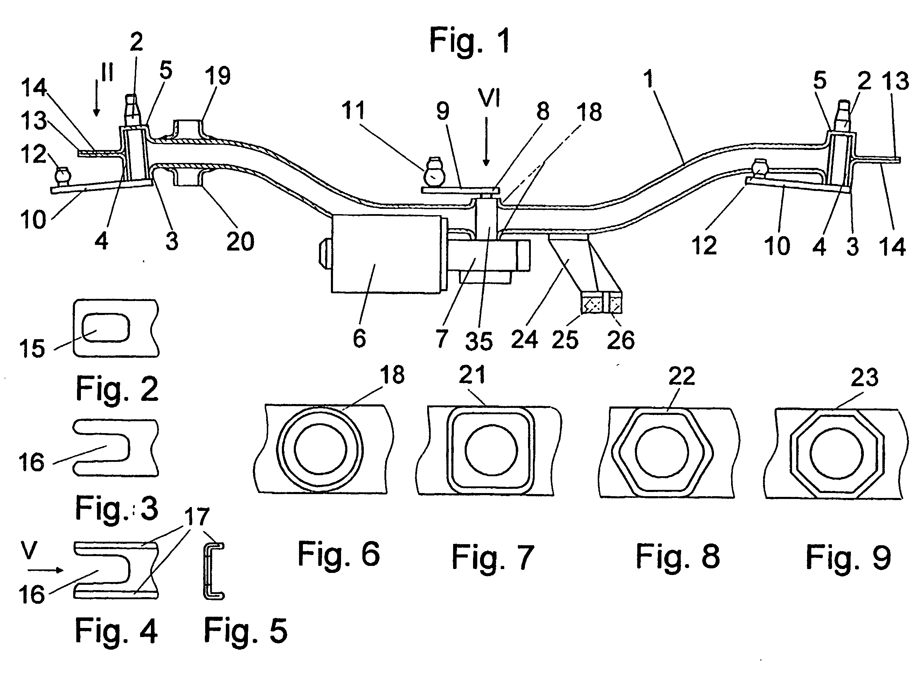

Die in Figur 1 dargestellte Wischeranlage besitzt eine Rohrplatine 1, die einzelne Bauteile der Wischeranlage, nämlich einen Wischerantrieb mit einem Elektromotor 6 und einem Getriebe 7 sowie eine Antriebswelle 8 mit einer Antriebskurbel 9 und Abtriebswellen 2 mit Abtriebskurbeln 10 trägt und über Befestigungselemente 13 an einer nicht dargestellten Fahrzeugkarosserie befestigt ist. Die Antriebskurbel 9 und die Abtriebskurbeln 10 sind triebmäßig über nicht dargestellte Antriebsstangen verbunden, die an einer Doppelgelenkkugel 11 an der Antriebskurbel 9 und weiteren Gelenkkugeln 12 an den Abtriebskurbeln 10 angreifen. Auf die freien Enden der Abtriebswellen 2, die aus der Fahrzeugkarosserie nach außen geführt sind, werden nicht dargestellte Wischerarme aufgesteckt und befestigt. Die Abtriebswellen 2 sind axial durch Anlaufscheiben 5 gesichert.

Die Rohrplatine 1 ist aus einem Rohrstück hergestellt und besitzt im Bereich ihrer Enden jeweils zwei gegenüberliegende, angeformte Rohrstutzen 3 zur Aufnahme von Lagerbuchsen 4, in denen die Abtriebswellen 2 gelagert sind. Zu den Enden der Rohrplatine 1 hin schließen sich Befestigungselemente 13 an, die durch Umformen der Rohrenden angeformt werden. Sie weisen ein U-förmiges Profil auf und haben Öffnungen in Form von Löchern 14 (Figur 1), Langlöchern 15 (Figur 2), oder Schlitzen 16 (Figur 4 und 5), durch die nicht gezeigte Befestigungsschrauben gesteckt werden. Die Langlöcher 15 und die Schlitze 16 eignen sich, Längentoleranzen auszugleichen.

Bei der Ausführungsform nach den Figuren 4 und 5 besitzt das Befestigungselement 13 seitlich des Schlitzes 16 Schenkel 17, die ein u-förmiges Profil bilden und das Befestigungselement 13 form- und biegesteif an die Rohrstutzen 3 für die Wischerlager anschließen. Wird die Rohrplatine 1 in einem Umformverfahren, z. B. mit Innenhochdruck, hergestellt, können die Befestigungselemente 13 in der gleichen Bearbeitungsstation durch Pressen, Abkanten und Stanzen gefertigt werden.

Der Wischerantrieb wird ebenfalls in der Rohrplatine 1 mittels zweier gegenüberliegender, angeformter Rohrstutzen 18 gehalten, und zwar indem ein Gehäusevorsprung, z. B. ein Lagergehäuse 35 des Getriebes, durch die Rohrplatine 1 geführt ist und in dem Rohrstutzen 18 gehalten wird. Dadurch ist nur ein Bauteil, nämlich die Rohrplatine 1, zur Aufnahme der Wischerlager und zur Halterung des Wischerantriebs notwendig, wodurch sich die Gesamtzahl der Bauteile und Schnittstellen wesentlich reduziert.

Das Hohlprofil der Rohrplatine 1 ergibt schon an sich eine form- und biegesteife Konstruktion. Diese kann durch eine besondere Profilierung der Rohrplatine 1 und / oder der Rohrstutzen 3 und 18 noch verbessert werden. Die Profilierung verbessert neben der Steifigkeit die Montage durch günstigere Anlageflächen sowie das Schwingungsverhalten. Diese Vorteile können besonders gut genutzt werden, wenn die Profile örtlich unterschiedlich auf die Belastungen abgestimmt sind. Ferner kann durch die Profilierung mit einem von der Kreisform abweichenden Querschnitt in einfacher Weise ein Formschluß zur Aufnahme von Drehmomenten hergestellt werden. Die Figuren 7 bis 9 zeigen polygone Profile am Beispiel eines viereckigen Rohrstutzens 21, eines sechseckigen Rohrstutzens 22 und eines achteckigen Rohrstutzens 23. Der Querschnitt der Rohrplatine 1 kann gleich oder ähnlich profiliert sein, je nach ihrer Belastung und den räumlichen Erfordernissen.

Die Rohrplatine 1 kann für besondere Funktionen zusätzliche Rohrstutzen 19 aufweisen, die im Bedarfsfall an der Rohrplatine 1 befestigt werden, z. B. durch Schrauben, Klemmen, Schweißen usw.. Dadurch kann der Anwendungsbereich der Rohrplatine 1 einfach erweitert werden. Die zusätzlichen Rohrstutzen 19 können wie die übrigen Rohrstutzen 3 und 18 im Innenhochdruckverfahren angeformt werden, damit die Rohrplatine 1 für mehrere verschiedene Einsatzfälle vorbereitet ist. In diesem Fall werden die zusätzlichen Rohrstutzen 19 erst im Bedarfsfall geöffnet, um zu verhindern, daß in die Rohrplatine 1 Feuchtigkeit eindringt und das Innere der Rohrplatine 1 korrodiert.

In der Regel reichen die Befestigungselemente 13 an den Enden der Rohrplatine 1 zur dauerhaften Befestigung aus. Bei langen oder schwereren Wischeranlagen oder in besonderen Einsatzfällen kann eine weitere Abstützung zweckmäßig sein. Hierfür ist eine zusätzliche Stütze 24 vorgesehen, die durch Stecken, Klemmen, Schrauben usw. an der Rohrplatine 1 befestigt ist und sich über ein Dämpfungselement 25 an der Fahrzeugkarosserie abstützt. Ein Befestigungsloch 26 ist für eine Schraube vorgesehen.

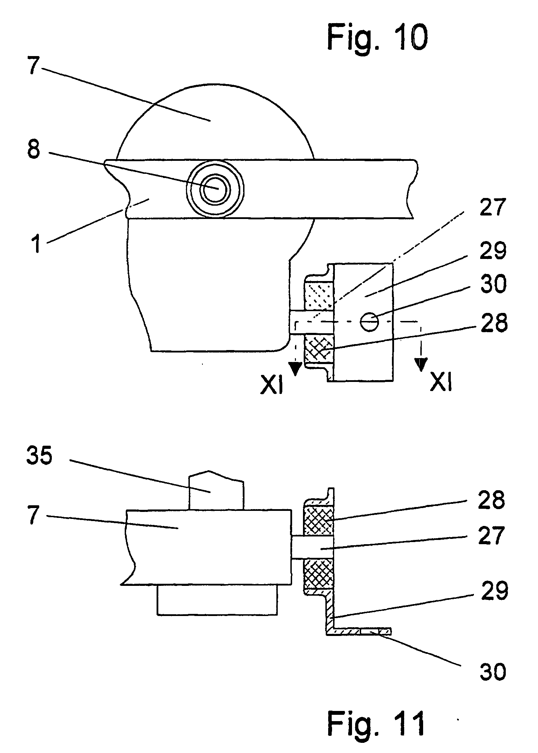

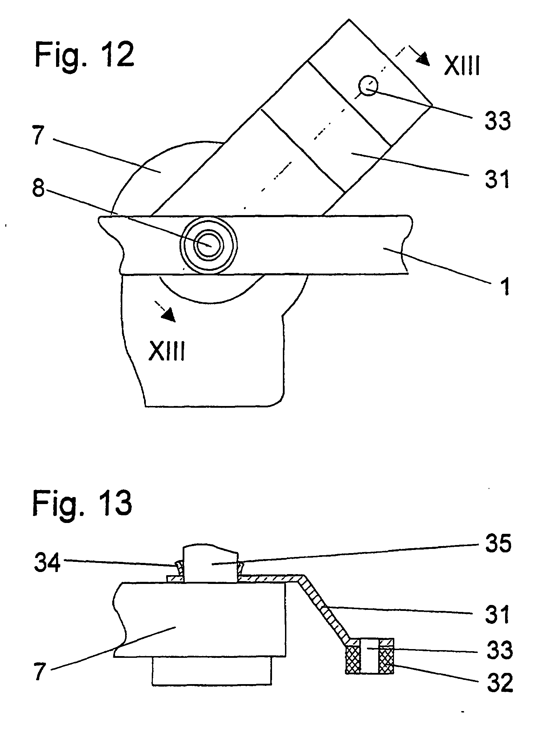

Die Rohrplatine 1 kann auch indirekt über den Wischerantrieb abgestützt werden, indem eine Stütze 29 mit einem Dämpfungselement 28 an einem Gehäusevorsprung 27 des Elektromotors 6 oder des Getriebes 7 angreift. Ein Befestigungsloch 30 dient wieder zur Befestigung an der Fahrzeugkarosserie (Figuren 10 und 11).

Ein solcher Gehäusevorsprung kann, wie die Figuren 12 und 13 zeigen, auch von einem Lagergehäuse 35 des Getriebes 7 gebildet werden. In diesem Fall umfaßt eine Stütze 31 das Lagergehäuse 35 zwischen dem Getriebe 7 und der Rohrplatine 1. Ein weiteres Dämpfungselement 32 und ein Befestigungsloch 33 dienen zur Befestigung an der Fahrzeugkarosserie.

Wenn es durch Bauraum, Geometrie und / oder Kinematik bedingt wird, kann der Wischerantrieb an der Rohrplatine durch ein zusätzliches Befestigungselement (Halteblech oder ähnliches) befestigt sein.

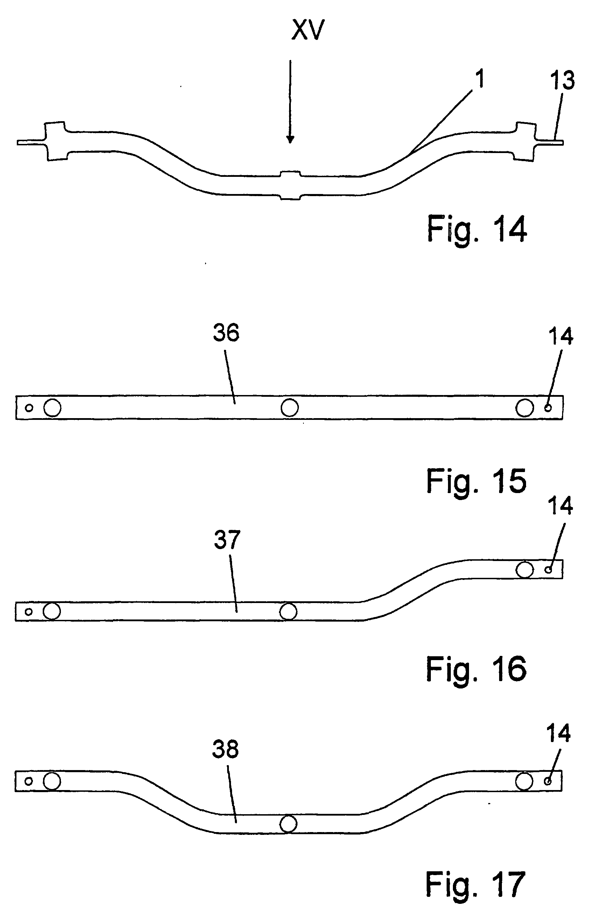

Verfahren der spanlosen Formgebung, wie z. B. das Innenhochdruckverfahren oder Spritzgußverfahren gestatten eine komplexe Formgebung. Dadurch kann die Rohrplatine 1 selbst komplizierten Einbauverhältnissen angepaßt werden, indem sie einfach oder mehrfach in einer oder mehreren Ebenen gekrümmt ist. Figur 14 zeigt eine mehrfach gekrümmte Rohrplatine 1, die in der Ausführung 36 nach Figur 15 nur in einer Ebene gekrümmt ist. Die Figur 16 zeigt eine Ausführung 37, bei der ein Ende in einer Ebene parallel versetzt zum mittleren Teil und anderen Ende der Rohrplatine 37 liegt. Bei der Ausführung 38 der Rohrplatine liegen beide Enden in einer zum mittleren Teil parallel versetzten Ebene.

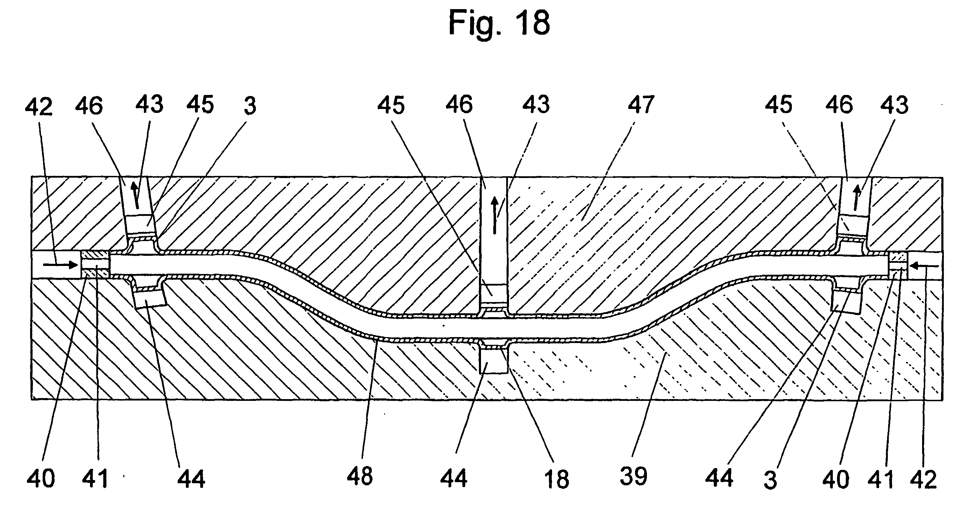

Obwohl die Rohrplatine 1 in den verschiedenen Varianten durch unterschiedliche Formgebungsverfahren hergestellt werden kann, ist das Innenhochdruckverfahren besonders geeignet. Dabei wird ein Rohrstück 48 (Figur 18) in eine geteilte Werkzeugform mit einer unteren Werkzeugform 39 und einer oberen Werkzeugform 47 gelegt. Die Rohrenden werden durch Dichtwerkzeuge 40 geschlossen. Eine nicht dargestellte Presse schließt die Werkzeugform. Dabei kann das Rohrstück 48 bereits vorgeformt werden. Es ist auch möglich sonstwie vorgeformte Rohrstücke 48 zu verwenden. Dies ist besonders bei komplexeren Formen zweckmäßig.

Unter hohem Druck wird durch Druckmittelzuführungen 41 in den Dichtwerkzeugen 40 Druckmittel in das Rohrstück 48 gepreßt, so daß sich das Rohrstück 48 an die Innenkontur der Werkzeugform 39, 47 anlegt und in Hohlräume 44 für die Rohrstutzen 3, 18, 21, 22, und 23 fließt und ausformt. Danach wird die Rohrplatine 1 aus der Werkzeugform 39, 47 entnommen. Die angeformten Rohrstutzen 3, 18, 21, 22, 23 werden geöffnet, z. B. durch Abtrennen des Endes der Rohrstutzen oder durch Bohren oder Stanzen. Bleibt in Umfangsrichtung der Rohrstutzens 3, 18, 21, 22, 23 ein Kragen stehen, kann dieser als eine axiale Begrenzung oder als ein axialer Anschlag genutzt werden.

Die Rohrstücke 48 können aus vielerlei Werkstoff bestehen. Als besonders günstig hat sich ein verzinktes Stahlrohr mit niedriger Festigkeit erwiesen; aber auch Rohrstücke 48 aus einer Aluminiumlegierung sind wegen ihres geringen Gewichts und der guten Korrosionsbeständigkeit sehr vorteilhaft.

Um möglichst gleichmäßige Wandstärken zu erzielen, werden zweckmäßigerweise während des Umformens des Rohrstücks 48 die Rohrenden mit den Dichtwerkzeugen 40 in Richtung der Pfeile 42 nachgeschoben. Dadurch wird der Werkstoff zum Ausformen der Rohrstutzen 3 und 18 nicht nur der Wandstärke des übrigen Rohrstücks 48 entnommen, sondern auch aus der Verkürzung des Rohrstücks 48 zu Verfügung gestellt. Ferner kann das Ausformen der Rohrstutzen 3 und 18 durch Formstempel 45 gesteuert werden, die in Kanälen 46 der Werkzeugform 39, 47 geführt sind und auf die Rohraußenseite in Richtung der Pfeile 43 einwirken. Damit kann die Höhe der Rohrstutzen 3 und 18 bestimmt werden

## Patentansprüche

1. Rohrplatine (1) für eine Wischeranlage als Träger für mindestens ein Wischerlager und einen Wischerantrieb (7, 8), die Rohrstutzen (3) zur Aufnahme des Wischerlagers aufweist, wobei die Rohrplatine (1) spanlos umgeformt ist und die Rohrstutzen (3, 18) zur Aufnahme eines Wischerlagers an der Rohrplatine (1) einstückig angeformt sind, wobei an den Enden der Rohrplatine (1) Befestigungselemente (13) angeformt sind und die Befestigungselemente (13) ein U-förmiges Profil haben und ein Loch (14, 15) oder einen Schlitz (16) aufweisen.

2. Rohrplatine (1) nach Anspruch 1, **dadurch gekennzeichnet, dass** die Rohrplatine (1) zur Aufnahme eines Wischerantriebs (7, 8) einen einstückig angeformten Rohrstutzen (18) aufweist.

3. Rohrplatine (1) nach einem der vorhergehenden Ansprüche, **dadurch gekennzeichnet, dass** die Rohrplatine (1) und/oder die Rohrstutzen (3, 18, 21, 22, 23) einen von einem Kreisquerschnitt abweichenden, insbesondere polygonen Querschnitt aufweisen.

4. Rohrplatine (1) nach Anspruch 1, 2 oder 3, **dadurch gekennzeichnet, dass** die Rohrplatine (1) örtlich unterschiedliche Querschnitte aufweist.

5. Rohrplatine (1) nach Anspruch 1, **dadurch gekennzeichnet, dass** eine zusätzliche Stütze (24) mit der Rohrplatine (1) verbunden ist.

6. Rohrplatine nach Anspruch 1, **dadurch gekennzeichnet, dass** die zusätzliche Stütze (29) an dem Wischerantrieb (7, 8) angebracht ist.

7. Rohrplatine (1) nach Anspruch 1, **dadurch gekennzeichnet, dass** ein zusätzlicher Rohrstutzen (19) mit der Rohrplatine (1) verbunden ist.

8. Rohrplatine (1) nach Anspruch 1, **dadurch gekennzeichnet, dass** die Rohrplatine (1, 36, 37, 38) in einer oder mehreren Ebenen gekrümmt ist.

9. Verfahren zur Herstellung einer Rohrplatine (1) nach einem der vorhergehenden Ansprüche, **dadurch gekennzeichnet, dass**
- ein Rohrstück (48) in eine geteilte Werkzeugform (39, 47) gelegt wird,
- die Rohrenden durch Dichtwerkzeuge (40) geschlossen werden,
- die Werkzeugform (39, 47) geschlossen wird,
- durch die Dichtwerkzeuge (40) Druckmittel zugeführt wird,
- die Innenkontur der Werkzeugform (39, 47) mit Hohlräumen (44) für die Rohrstutzen (3, 18, 21, 22, 23) durch Druckaufbau ausgeformt wird,
- die Rohrplatine (1) aus der Werkzeugform (39, 47) entnommen wird und die angeformten Rohrstutzen (3, 18, 21, 22, 23) geöffnet werden.

10. Verfahren nach Anspruch 9, **dadurch gekennzeichnet, dass** ein vorgebogenes Rohrstück (48) verwendet wird.

11. Verfahren nach Anspruch 10, **dadurch gekennzeichnet, dass** das Rohrstück (48) beim Schließen der Werkzeugform (39, 47) vorgebogen wird.

12. Verfahren nach einem der Ansprüche 9 bis 11, **dadurch gekennzeichnet, dass** ein verzinktes Stahlrohr mit niedriger Festigkeit verwendet wird.

13. Verfahren nach einem der Ansprüche 9 bis 11, **dadurch gekennzeichnet, dass** ein Rohrstück (48) aus einer Aluminiumlegierung verwendet wird.

14. Verfahren nach einem der Ansprüche 9 bis 13, **dadurch gekennzeichnet, dass** während des Umformens des Rohrstücks (48) die Rohrenden mit den Dichtwerkzeugen (40) nachgeschoben werden.

15. Verfahren nach einem der Ansprüche 9 bis 14, **dadurch gekennzeichnet, dass** die Rohrstutzen (3, 18, 21, 22, 23) durch gesteuertes Ziehen von Formstempeln (45) ausgeformt werden, die in der Werkzeugform (39, 47) geführt sind und auf die Rohraußenseite einwirken.

16. Verfahren nach einem der Ansprüche 9 bis 15, **dadurch gekennzeichnet, dass** die Befestigungselemente (13) durch spanloses Umformen der Rohrplatine (1) erzeugt werden.

17. Verfahren nach einem der Ansprüche 9 bis 16, **dadurch gekennzeichnet, dass** die Löcher (14, 15) bzw. die Schlitze (16) durch Stanzen hergestellt werden.

18. Verfahren nach einem der Ansprüche 16 oder 17, **dadurch gekennzeichnet, dass** die Befestigungselemente (13) in einer gleichen Bearbeitungsstation in einem sich anschließenden Arbeitsgang angeformt werden.

19. Verfahren nach einem der Ansprüche 9 bis 15, **dadurch gekennzeichnet, dass** die zusätzlichen Rohrstutzen (19) bzw. zusätzlichen Stützen (24, 29, 31) aufgesteckt, festgeklemmt, angeschraubt oder angeschweißt werden.

## Claims

1. Tube mounting plate (1) for a wiper system as a carrying means for at least one wiper bearing and a wiper drive (7, 8), which tube mounting plate has tube connecting branches (3) for holding the wiper bearing, the tube mounting plate (1) being formed without cutting, and the tube connecting branches (3, 18) for holding a wiper bearing being integrally formed as a single piece on the tube mounting plate (1), fastening elements (13) being integrally formed on the ends of the tube mounting plate (1) and the fastening elements (13) having a U-shaped profile and a hole (14, 15) or a slot (16).

2. Tube mounting plate (1) according to Claim 1, **characterized in that** the tube mounting plate (1) has a tube connecting branch (18) integrally formed on it as a single piece for the purpose of holding a wiper drive (7, 8).

3. Tube mounting plate (1) according to one of the preceding claims, **characterized in that** the tube mounting plate (1) and/or the tube connecting branches (3, 18, 21, 22, 23) have a cross section which departs from a circular cross section and in particular is polygonal.

4. Tube mounting plate (1) according to Claim 1, 2 or 3, **characterized in that** the tube mounting plate (1) has locally differing cross sections.

5. Tube mounting plate (1) according to Claim 1, **characterized in that** an additional support (24) is connected to the tube mounting plate (1).

6. Tube mounting plate according to Claim 1, **characterized in that** the additional support (29) is fitted to the wiper drive (7, 8).

7. Tube mounting plate (1) according to Claim 1, **characterized in that** an additional tube connecting branch (19) is connected to the tube mounting plate (1).

8. Tube mounting plate (1) according to Claim 1, **characterized in that** the tube mounting plate (1, 36, 37, 38) is curved in one or more planes.

9. Method for producing a tube mounting plate (1) according to one of the preceding claims, **characterized in that**
- a tube piece (48) is placed into a divided mould (39, 47),
- the tube ends are closed by sealing tools (40),
- the mould (39, 47) is closed,
- pressure medium is supplied through the sealing tools (40),
- the inner contour of the mould (39, 47) is formed with cavities (44) for the tube connecting branches (3, 18, 21, 22, 23) by the build-up of pressure,
- the tube mounting plate (1) is removed from the mould (39, 47) and the integrally formed tube connecting branches (3, 18, 21, 22, 23) are opened.

10. Method according to Claim 9, **characterized in that** a pre-bent tube piece (48) is used.

11. Method according to Claim 10, **characterized in that** the tube piece (48) is pre-bent when the mould (39, 47) is closed.

12. Method according to one of Claims 9 to 11, **characterized in that** a galvanized steel tube of low strength is used.

13. Method according to one of Claims 9 to 11, **characterized in that** a tube piece (48) made of an aluminium alloy is used.

14. Method according to one of Claims 9 to 13, **characterized in that** during the forming of the tube piece (48) the tube ends are pushed from behind by the sealing tools (40).

15. Method according to one of Claims 9 to 14, **characterized in that** the tube connecting branches (3, 18, 21, 22, 23) are formed by controlled drawing of shaping punches (45) which are guided in the mould (39, 47) and act upon the outside of the tube.

16. Method according to one of Claims 9 to 15, **characterized in that** the fastening elements (13) are produced by forming the tube mounting plate (1) without cutting.

17. Method according to one of Claims 9 to 16, **characterized in that** the holes (14, 15) and the slots (16) are produced by stamping.

18. Method according to either of Claims 16 or 17, **characterized in that** the fastening elements (13) are integrally formed in an identical machining station in a subsequent operation.

19. Method according to one of Claims 9 to 15, **characterized in that** the additional tube connecting branches (19) and additional supports (24, 29, 31) are plugged on, securely clamped, screwed on or welded on.

## Revendications

1. Platine de support tubulaire (1) pour une installation d'essuie-glace comme support d'au moins un palier d'essuie-glace et d'un entraînement d'essuie-glace (7, 8), comportant des ajutages tubulaires (3) pour recevoir le palier d'essuie-glace,
la platine de support tubulaire (1) étant mise en forme par usinage sans enlèvement de copeaux et les ajutages tubulaires (3, 18) étant formés en une seule pièce pour recevoir un palier d'essuie-glace sur la platine (1),
et les extrémités de la platine de support tubulaire (1) sont munies d'éléments de fixation (13) formés sur ces extrémités et ces éléments de fixation (13) ont un profil en forme de U et un orifice (14, 15) ou une fente (16).

2. Platine de support tubulaire (1) selon la revendication 1,
**caractérisée en ce qu'**
elle comporte un ajutage tubulaire (18) réalisé en une seule pièce pour recevoir l'entraînement (7, 8) de l'essuie-glace.

3. Platine de support tubulaire (1) selon l'une quelconque des revendications précédentes,
**caractérisée en ce qu'**
elle (1) et/ou les ajutages tubulaires (3, 18, 21, 22, 23) ont une section différente d'une section circulaire notamment une section polygonale.

4. Platine de support tubulaire (1) selon l'une quelconque des revendications 1 à 3,
**caractérisée en ce qu'**
elle présente des sections localement différentes.

5. Platine de support tubulaire (1) selon la revendication 1,
**caractérisée par**
un support supplémentaire (24).

6. Platine de support tubulaire (1) selon la revendication 1,
**caractérisée en ce que**
le support supplémentaire (29) est prévu sur l'entraînement (7, 8) de l'essuie-glace.

7. Platine de support tubulaire (1) selon la revendication 1,
**caractérisée par**
un ajutage tubulaire (19) supplémentaire relié à la platine de support tubulaire (1).

8. Platine de support tubulaire (1) selon la revendication 1,
**caractérisée en ce qu'**
elle (1, 36, 37, 38) est cintrée dans un ou plusieurs plans.

9. Procédé de fabrication d'une platine de support tubulaire (1) selon l'une quelconque des revendications précédentes,
**caractérisé en ce qu'**
- on place un élément tubulaire (48) dans un moule divisé (39, 47),
- on ferme les extrémités de l'élément tubulaire par des outils d'étanchéité (40),
- on ferme le moule (39, 47),
- on fournit du fluide sous pression par les outils d'étanchéité (40),
- on remplit le contour intérieur du moule (39, 47) avec les cavités (44) des ajutages tubulaires (3, 18, 21, 22, 23) en appliquant une pression,
- on extrait la platine de support tubulaire (1) du moule (39, 47) et on ouvre les ajutages tubulaires formés (3, 18, 21, 22, 23).

10. Procédé selon la revendication 9,
**caractérisé en ce qu'**
on utilise un élément tubulaire (48) pré-cintré.

11. Procédé selon la revendication 10,
**caractérisé en ce qu'**
on assure le pré-cintrage de l'élément tubulaire (48) à la fermeture du moule (39, 47).

12. Procédé selon l'une quelconque des revendications 9 à 11,
**caractérisé en ce qu'**
on utilise un tube d'acier zingué de faible résistance.

13. Procédé selon l'une quelconque des revendications 9 à 11,
**caractérisé en ce qu'**
on utilise un élément tubulaire (48) en un alliage d'aluminium.

14. Procédé selon l'une quelconque des revendications 9 à 13,
**caractérisé en ce que**
pendant la transformation de l'élément tubulaire (48) on pousse les extrémités du tube avec les outils d'étanchéité (40).

15. Procédé selon l'une quelconque des revendications 9 à 14,
**caractérisé en ce qu'**
on forme les ajutages tubulaires (9, 18, 21, 22, 23) par un étirage commandé des poinçons de formage (45), qui sont guidés dans le moule (39, 47) et agissent sur le côté extérieur du tube.

16. Procédé selon l'une quelconque des revendications 9 à 15,
**caractérisé en ce qu'**
on réalise les éléments de fixation (13) par une transformation sans enlèvement de copeaux de la platine de support tubulaire (1).

17. Procédé selon l'une quelconque des revendications 9 à 16,
**caractérisé en ce qu'**
on réalise les trous (14, 15) ou les fentes (16) par matriçage.

18. Procédé selon l'une quelconque des revendications 16 ou 17,
**caractérisé en ce qu'**
on forme les éléments de fixation (13) dans le même poste de travail au cours d'une opération suivante.

19. Procédé selon l'une quelconque des revendications 9 à 15,
**caractérisé en ce qu'**
on emmanche, on serre, on visse ou on soude les éléments tubulaires supplémentaires (19) ou les ajutages supplémentaires (24, 29, 31).
